# EUROPÄISCHE PATENTANMELDUNG

(11) **EP 1 918 158 A2**
(43) Veröffentlichungstag der Anmeldung: **07.05.2008**
(21) Anmeldenummer: 07017577.3
(22) Anmeldetag: 07.09.2007
(51) Int. Cl.: B60P 7/14

(54) **Einrichtung zur Ladungssicherung für Fahrzeuge mit einer Ladefläche**

(30) Priorität: 26.10.2006 DE 102006051248
(71) Anmelder: Seebauer, Kurt, 44227 Dortmund (DE)
(72) Erfinder: Seebauer, Kurt, 44227 Dortmund (DE)
(74) Vertreter: Schneider, Uwe

(57) **Zusammenfassung**

Die Erfindung betrifft eine Einrichtung zur Ladungssicherung für Fahrzeuge mit einer Ladefläche, aufweisend ein Trennelement (1) zwischen einem beim Transport von Gegenständen (9, 10) belegten Bereich und einem beim Transport von Gegenständen (9, 10) unbelegten Bereich einer Ladezone (3) des Fahrzeuges, bei der das mindestens eine Trennelement (1) eine plattenförmige Grundform aufweist und auf einem im Bereich der Ladezone (3) angeordneten Schienensystem (5) verstellbar die Ladezone (3) derart unterteilt, dass in der Ladezone (3) angeordnete Gegenstände (9, 10) zwischen den Wandungen (4, 19, 20) der Ladezone (3) und dem Trennelement (1) oder zwischen benachbarten Trennelementen (1) gehaltert verrutschungssicher aufgenommen sind.

## Beschreibung

Die Erfindung betrifft eine Einrichtung zur Ladungssicherung für gemäß Oberbegriff des Anspruches 1.

Die Ladungssicherung für Transportfahrzeuge ist ein wesentlicher Bestandteil von Unfallverhütungsmassnahmen bzw. von Maßnahmen zur Reduzierung von Unfallfolgen. Im PkW-Bereich, aber gerade auch im Bereich kommerzieller Gütertransporte wird überwiegend Stückgut transportiert, wobei das Stückgut typischerweise auf einer Ladefläche des Transportfahrzeuges abgelegt wird und dort weitgehend ungesichert bleibt. Bei abrupten Geschwindigkeitsänderungen des Transportfahrzeuges wie etwa starken Bremsungen oder starken Lenkbewegungen kommt es häufig dazu, dass das Stückgut auf der Ladefläche rutscht und zu einer Gefährdung von Fahrzeug und Fahrer führt. Hierdurch sind schon viele sehr schwere Unfälle mit hohen finanziellen Schäden und Personenschäden ausgelöst worden.

Zur Vermeidung derartiger Schäden aufgrund des Verrutschens der Ladung sind schon viele Vorschläge gemacht worden, wie das zu transportierende Gut auf der Ladefläche gesichert werden könnte. Insbesondere aus dem Bereich der Ladungssicherung für Lastkraftwagen sind eine Reihe von Lösungen bekannt, bei denen mittels in den Laderaum klemmbarer Bügel oder Verstrebungen das auf der Ladefläche befindliche Gut gesichert werden kann. Diese Lösungen haben häufig den Nachteil, dass an der Ladefläche des Lastkraftwagens entsprechende Halteeinrichtungen für die Bügel oder Verstrebungen angebracht sein müssen, um eine entsprechende Verspannung der Bügel oder Verstrebungen gegenüber dem Gut zu realisieren. Derartige Halteeinrichtungen sind dann häufig aber nicht an die jeweils in Abhängigkeit von den zu transportierenden Gütern sich ändernde Lage des Gutes anpassbar, so dass ein hoher zeitlicher Aufwand zur Sicherung der Ladung zu treiben ist.

Denkbar ist weiterhin auch die Verwendung von zwischen den Wandungen der Ladefläche verspannten Netzen, die sich an die zu transportierenden Güter anschmiegen und diese nach dem Verspannen stabilisieren.

Eine andere vielfach verwendete Lösung besteht in der Verwendung von sog. Zurrgurten, die als flexible Elemente zwar auch Befestigungspunkte am Aufbau des Lastkraftwagens benötigen, durch die Flexibilität des Gurtes aber einfacher zu handhaben sind. Hierbei wird das Gurt mit einem oder mehreren Gurten auf der Ladefläche festgelegt, wobei die Zurrgurte zwischen aufbauseitigen Einhängepunkten verspannt wird. Nachteilig hieran ist die starke Abnutzung der Gurte durch den Spannvorgang, der schnell zu einer Zerstörung der Gurte oder zu einer Beeinträchtigung ihrer Sicherheit und immer wieder zur unzureichenden Ladungssicherung trotz der Verwendung derartiger Zurrgurte führt.

Aufgabe der vorliegenden Erfindung ist es daher, eine Einrichtung zur Ladungssicherung für Transportfahrzeuge vorzuschlagen, die einfach zu bedienen und damit zu transportierende Güter einfach abzusichern ist.

Die Lösung der erfindungsgemäßen Aufgabe ergibt sich aus den kennzeichnenden Merkmalen des Anspruches 1 in Zusammenwirken mit den Merkmalen des Oberbegriffes. Weitere vorteilhafte Ausgestaltungen der Erfindung ergeben sich aus den Unteransprüchen.

Die Erfindung geht aus von einer Einrichtung zur Ladungssicherung für Fahrzeuge mit einer Ladefläche, aufweisend ein Trennelement zwischen einem beim Transport von Gegenständen belegten Bereich und einem beim Transport von Gegenständen unbelegten Bereich einer Ladezone des Fahrzeuges. Eine derartige gattungsgemäße Einrichtung wird dadurch weiter entwickelt, dass das mindestens eine Trennelement eine plattenförmige Grundform aufweist und auf einem im Bereich der Ladezone angeordneten Schienensystem verstellbar die Ladezone derart unterteilt, dass in der Ladezone angeordnete Gegenstände zwischen den Wandungen der Ladezone und dem Trennelement oder zwischen benachbarten Trennelementen gehaltert verrutschungssicher aufgenommen sind. Hierdurch werden in der Ladezone einzelne, an die Größe der jeweils zu transportierenden Güter angepasste Bereich abgetrennt, innerhalb derer die Güter dann nicht mehr verrutschen können und durch das oder die Trennelemente und/oder die Wandungen der Ladezone sicher gehalten sind. Die flächige Abtrennung mit Hilfe der plattenförmig ausgebildeten Trennelemente lässt sich durch die Verstellung in dem Schienensystem leicht an die jeweilige Größe der abzusichernden Güter anpassen und trennt die jeweils verrutschungssicher abgetrennten Güter aufgrund der plattenförmigen Gestaltung der Trennelemente im wesentlich vollständig voneinander. Damit lässt sich die Ladungssicherung insbesondere auch bei Kleinlasttransportern und Kombis, aber auch bei Lastkraftwagen oder anderen Fahrzeugen sowie auch bei Schiffen, Flugzeugen oder dgl. einfach bewerkstelligen und damit die Akzeptanz zur Durchführung derartiger Ladungssicherungsmaßnahmen deutlich erhöhen.

In einer ersten vorteilhaften Ausgestaltung ist es denkbar, dass das Trennelement aus mehreren plattenartigen Einzelelementen besteht, die verschiebbar oder klappbar aneinander festgelegt sind und mit denen die Größe des Trennelementes den Abmessungen der Ladezone und der zu transportierenden Gegenstände anpassbar sind. Durch die Unterteilung des Trennelementes in mehrere, plattenartig ausgebildete Einzelelemente kann dafür gesorgt werden, dass in Abhängigkeit von der Größe des abzusichernden Gutes ein mehr oder weniger großer Bereich des Raums abgeteilt werden kann. Hierzu kann durch das Verschieben oder durch das Ausklappen der plattenartigen Einzelelementen die wirksame Fläche des Trennelementes entsprechend angepasst werden und dass abzusichernde Gut mehr oder weniger flächig von den anderen Gütern in der Ladezone abtrennen. Gleichzeitig besteht die Möglichkeit, bei Nichtbenutzung des Trennelementes dieses entsprechend klein zusammenzulegen oder zusammenzuschieben, so dass der Platzbedarf des Trennelementes bei Nichtbenutzung recht gering ist. Eine besonders hohe Platzersparnis lässt sich erreichen, wenn die mehreren plattenartigen Einzelelemente teleskopartig zueinander verschiebbar sind. Durch das teleskopartige Zusammenschieben ist der Bauraum des Trennelementes im nicht benutzten Zustand sehr klein, beim Ausziehen im benutzten Zustand hingegen verhältnismäßig sehr groß.

In weiterer Ausgestaltung ist es denkbar, dass mehrere Trennelemente im Bereich der Ladezone in Verstellrichtung der Schienen hintereinander angeordnet sind. Hierdurch lässt sich die Ladezone in mehrere, voneinander angepasst abgeteilte Bereiche unterteilen, die im Laderichtung hintereinander angeordnet sind und entsprechen nach dem Einladen des ersten Gutes ein erstes Trennelement in die Ladezone eingebracht wird, danach ein weiteres Gut geladen werden kann und durch ein weiteres Trennelement in Verstellrichtung der Schienen wiederum von einem dritten oder weiteren Bereichen abgetrennt werden kann. Hierdurch lässt sich das Laden der Güter bei gleichzeitiger Einbringung der jeweiligen Transportsicherung sicher und einfach bewerkstelligen.

In der ersten vorteilhaften Ausgestaltung ist es denkbar, dass die Schienen zur Verstellung des Trennelementes an den oberen und unteren Wandungen des Fahrzeuges im Bereich der Ladezone angeordnet sind. Insbesondere beispielsweise bei Personenkraftwagen oder Kleinlasttransportern ist der Dachbereiches über einer Ladezone in der Regel so verstärkt ausgebildet, dass daran die Schienen zur Verstellung des Trennelementes angebracht und stark genug ausgebildet sein können. Hierdurch kann das Trennelement zwischen den unten liegenden, in der Auflage der Ladezone befindlichen Schienen und den dachseits angeordneten Schienen befestigt werden und somit insgesamt sehr steif ausgebildet bzw. angeordnet werden.

Eine andere Ausgestaltung sieht vor, dass die Schienen zur Verstellung des Trennelementes an den seitlichen Wandungen des Fahrzeuges im Bereich der Ladezone angeordnet sind. Dies kommt insbesondere dann zum Tragen, wenn beispielsweise bei Lastkraftwagen der Dachbereich über der Ladezone nicht derart konstruktiv ausgelegt ist, dass die bei Bremsungen oder dgl. auftretenden Lasten übertragen werden können, wie dies beispielsweise bei flexiblen Aufbauten von Lastkraftwagen der Fall ist. Dann können die Schienen im in der Regel steiferen seitlichen Bereich des Fahrzeuges angeordnet werden und das Trennelement hängt zwischen den seitlich angeordneten Schienen in der Ladezone des Fahrzeuges Selbstverständlich kann dies auch bei anderen Fahrzeugen wie etwa Personenkraftwagen oder Kleinlasttransportern so erfolgen, wenn dies entsprechende Vorteile hinsichtlich Beladung oder dergleichen mit sich bringen sollte.

Eine erste konstruktive Ausgestaltung sieht vor, dass die Schienen zur Verstellung des Trennelementes ein Paar parallel zueinander angeordnete, zueinander beabstandete Einzelschienen aufweist. Derart parallel zueinander angeordnete und zueinander beabstandete Einzelschienen bieten die Möglichkeit, die bei der Sicherung der Güter auf das Trennelement ausgeübten Haltekräfte an voneinander beabstandeten Punkten über die Schienen in das Fahrzeug einzuleiten und damit nicht nur Kräfte, sondern auch Belastungsmomente sicher abfangen zu können. Der Abstand der Schienen voneinander sorgt weiterhin dafür, dass die entstehenden Kräfte beispielsweise bei Bremsungen oder dergleichen nicht nur punktuell in die Fahrzeugkarosserie eingeleitet, sondern an mehreren Stellen gleichzeitig auf die Karosserie übertragen werden.

Für die Beladung der Ladezone ist es von besonderem Vorteil, wenn die Schienen zur Verstellung des Trennelementes in den Boden oder die Wandungen des Fahrzeuges bündig eingelassen sind. Die Schienen stehen bei einer derartigen bündigen Gestaltung insbesondere im Bereich der Auflagefläche der Ladezone nicht über die Auflagefläche der Ladezone vor und können daher auch das Beladen der Ladezone nicht behindern. Gleiches gilt für die Schienen, die flächenbündig in den Wandungen des Fahrzeuges eingelassen sind, da hierdurch ein Verhaken von Gütern an diesen Schienen nicht erfolgen kann. Hierbei ist es weiterhin denkbar, dass die Schienen zur Verstellung des Trennelementes im wesentlichen einen C-förmigen, zur Ladezone hin offenen Querschnitt aufweisen und zum Beispiel Vorsprünge oder Hinterschnitte aufweisen, an denen Adapterelemente des Trennelementes festsetzbar sind. Derartige Schienen sind einfach herzustellen und bieten für seitens der Trennelemente angeordnete Adapterelemente einerseits eine gute Angriffsfläche, andererseits kann beispielsweise durch eine schmale Öffnung der Schienen zur Ladezone hin dafür gesorgt werden, dass keine Gegenstände in die Schienen hinein fallen können und das Einsetzen der Trennelemente stören.

Von Vorteil ist es weiterhin, wenn die Schienen zur Verstellung des Trennelementes im wesentlichen über die ganze Länge der Ladezone verlaufen. Hierdurch können Güter sehr unterschiedlicher Abmessungen an nahezu jeder Stelle der Ladezone des Fahrzeuges sicher festgesetzt werden, so dass beispielsweise im Heckbereich eines Fahrzeuges auch noch der letzte Raum ausgenutzt werden kann, ohne auf die Vorzüge der Ladungssicherung durch die Trennelemente verzichten zu müssen.

Ein besonderer Vorteil hinsichtlich der Sicherheit der Ladungssicherung durch das erfindungsgemäße Trennelement ist es, wenn das Trennelement im bestimmungsgemäßen Benutzungszustand beidseitig in den Schienen zur Verstellung des Trennelementes gelagert ist. Durch die beidseitige Lagerung des Trennelementes sowie die Ausgestaltung des Trennelementes als im wesentlichen plattenförmiges Bauteil kann über die gesamte Fläche des Trennelementes eine sehr stabile Ladungssicherung erreicht werden, so dass auch Güter unterschiedlicher vertikaler Abmessungen sicher durch die Einbringung eines Trennelementes festgelegt werden können. Hierdurch können auch Kippbelastungen, die beispielsweise durch hoch aufragende Güter in der Ladezone verursacht werden können, von dem Trennelement günstig abgefangen und sicher in die Fahrzeugkarosserie eingeleitet werden.

In einer ersten Ausgestaltung ist es denkbar, dass das Trennelement derart in den Schienen zur Verstellung des Trennelementes gelagert und verstellbar ist, dass das Trennelement parallel zu den Schienen innerhalb der Ladezone verschoben werden kann. Hierdurch können üblicherweise rechteckige Güter, deren Außenabmessungen etwa parallel beziehungsweise senkrecht zu der Anordnung der Schienen verlaufen, auf besonders einfache Art und Weise durch die Trennelemente festgesetzt werden, da die Trennelemente einfach parallel zu den Schienen in der Ladezone nach vom oder nach hinten eingeschoben beziehungsweise versetzt werden können. In einer anderen Ausgestaltung ist es jedoch auch denkbar, dass das Trennelement derart in den Schienen zur Verstellung des Trennelementes gelagert und verstellbar ist, dass das Trennelement auch schräg innerhalb der Ladezone angeordnet werden kann. Hierdurch kann erreicht werden, dass unregelmäßig geformte Güter oder z.B. runde Tonnen oder dergleichen, die in der Ladezone festgesetzt werden müssen, durch eine Schrägstellung des Trennelementes ebenfalls sicher beispielweise gegen ein benachbartes Trennelement oder die Wandungen der Ladezone gedrückt und damit fixiert werden.

Von besonderer Wichtigkeit für die Bedienung des Trennelementes sowie die Sicherheit der Festlegung der Güter ist es, dass das Trennelement derart in den Schienen zur Verstellung des Trennelementes gehalten ist, dass das Trennelement in seiner jeweiligen bestimmungsgemäßen Position festgesetzt werden kann. Durch eine entsprechende Festlegung des Trennelementes in den Schienen, die beispielsweise über einen einfachen Handgriff mit einer Verriegelungseinrichtung oder einer Klemmeinrichtung erfolgen kann, kann die Bedienung des Trennelementes sehr vereinfacht werden und gleichwohl eine feine Anpassung der Position des Trennelementes relativ zu den zu sichernden Gütern erzielt werden. Dies erhöht die Akzeptanz des Transportpersonals, da hierdurch der Beladevorgang und die Ladungssicherung nicht wesentlich verlängert werden gegenüber einer ungesicherten Verladung entsprechender Güter.

Für den Ladevorgang ist es weiterhin von Vorteil, wenn im Bereich einer Ladeöffnung des Transportfahrzeuges ein Trennelement in eine Position wie eine Laderampe bringbar ist, mit der ein Einladen von Gegenständen in die Ladezone vereinfacht wird. Ein derartiges Trennelement kann beispielsweise beim Beladen der Ladezone in diese Position verbracht werden und dann als Laderampe zum Einbringen der zu transportierenden Güter dienen, wozu ansonsten eine spezielle Laderampe mitgeführt werden müsste und daher gerade im Bereich von Kleinlasttransportern dies normalerweise nicht erfolgt.

Hinsichtlich des Aufbaus der Trennelemente ist es von Vorteil, wenn das Trennelement eine Anzahl von Balkenelementen, vorzugsweise zwei Balkenelemente aufweist, an denen plattenförmige Einzelelemente angeordnet sind. Eine derartige Gestaltung aus einzelnen Balkenelementen mit daran angeordneten plattenförmigen Einzelelementen hat den Vorteil, dass die Trennelemente insgesamt zwar einerseits steif, zum anderen aber relativ leichtgewichtig ausgeführt werden können, ohne dass die Qualität und Sicherheit der Ladungssicherung darunter leiden würde. Die Balkenelemente haben hierbei die hauptsächliche Aufgabe, die Lasten von dem Trennelement auf die Schienen und damit auf die Fahrzeugkarosserie zu übertragen, wohingegen die Trennplatten die im wesentlichen flächige Abdeckung zwischen den einzelnen Abschnitten der Ladezone herzustellen haben. Daher können die plattenförmigen Einzelelemente wesentlich leichtgewichtiger ausgebildet werden, als wenn die Trennplatten auch die Lastübertragung auf die Schienen zu übernehmen hätten. Hierzu kann in weiterer Ausgestaltung dafür gesorgt werden; dass die Balkenelemente beidends Adapterelemente aufweisen, an denen die Balkenelemente in den Schienen zur Verstellung des Trennelementes gehalten und verstellbar sind. Derartige Adapterelemente können beispielsweise über Klemmungen, Verschraubungen oder dergleichen an den Schienen festgelegt werden, so dass auch beliebige Zwischenpositionen für die Einstellung der Balkenelemente und damit der Trennelemente bezogen auf die zu sichernden Güter einstellbar sind.

Von Vorteil ist es weiterhin, wenn das Trennelement mit den Adapterelementen einseitig von den Schienen zur Verstellung des Trennelementes lösbar ist, so dass das Trennelement um die in den anderen Schienen verbleibenden Adapterelemente herum klappbar ist. Eine derartige klappbare Gestaltung der Trennelemente kann dazu genutzt werden, die Trennelemente in nicht benutzten Zustand an die Seiten oder die Decke der Ladezone zu klappen und dort zu fixieren, so dass die Trennelemente im nicht benutzten Zustand wenig Platz benötigen und den Ladevorgang selbst nicht stören. Hierbei ist es denkbar, dass das Trennelement nach oben, zur Seite oder nach unten klappbar ist, je nachdem, welches Adapterelement oder welche Adapterelemente gelöst werden und auf welche Seite oder in welche Richtung das Trennelement geklappt werden soll.

In weiterer Ausgestaltung ist es auch denkbar, dass das Trennelement mit den Adapterelementen von den Schienen zur Verstellung des Trennelementes lösbar ist, so dass das Trennelement aus der Ladezone vollständig entnehmbar ist. Hierdurch kann das Trennelement insgesamt aus der Ladezone des Fahrzeuges entfernt werden, wenn es durch die entsprechende Ladeverhältnisse nicht benötigt wird.

Eine einfache Art der Ankopplung des Trennelementes an die Schienen lässt sich dadurch erreichen, dass die Adapterelemente Gleitstücke aufweisen, die innerhalb der Schienen zur Verstellung des Trennelementes verschiebbar sind. Derartige Gleitstücke können beispielsweise klemmend an den Schienen im Bereich von Hinterschneidungen oder sonstigen Formelementen festgelegt werden, wenn das Trennelement festgesetzt wird und dabei eine sichere Festlegung des Trennelementes an den Schienen bewirken. Dies kann beispielsweise dadurch gelöst werden, dass die Gleitstücke und die balkenelementseitig angeordneten Teile des Adapterelementes voneinander lösbar verbunden sind. Die Gleitstücke verbleiben hierbei innerhalb der Schienen und können für das nächste Festsetzen der Trennelemente entsprechend wieder benutzt werden.

In einer anderen Ausgestaltung kann das Trennelement mit den Adapterelementen an den oberen Schienen zur Verstellung des Trennelementes im Bereich der Ladefläche hängend bewegbar sein, wodurch insbesondere die Bedienung des Trennelementes stark vereinfacht ist, da das Trennelement quasi gewichtsentlastet innerhalb der Ladefläche verschoben und an dem jeweils günstigsten Platz zur Ladungssicherung wieder neu festgelegt werden kann.

In einer anderen Ausgestaltung ist es auch denkbar, dass die Adapterelemente Kopfstücke aufweisen, die in die Schienen zur Verstellung des Trennelementes einsteckbar und an den Schienen verriegelbar sind. Hierbei sind die Anschlussteile der Adapterelemente an den Adapterelementen selbst angeordnet und verbleiben an diesen, so dass die Adapterelemente mit diesen Anschlusselementen in die Schienen eingesteckt und beispielsweise durch Verdrehen bajonettartig festgelegt werden können.

Von Vorteil ist es weiterhin, wenn die Kopfstücke im Querschnitt passend zu gegengleich geformten Vertiefungen in den Schienen ausgebildet sind und sich beim Verriegeln quer zur Längserstreckung der Schienen in die Vertiefungen hineinbewegen und in dieser Stellung verriegelt werden können. Insbesondere, wenn der Querschnitt der Kopfstücke die Kopfstücke verdrehgesichert in den Vertiefungen festlegt, kann hierdurch eine einfache und sichere Festlegung des Trennelementes an der Schiene erreicht werden.

Hinsichtlich der Betätigung ist es von Vorteil, wenn an den Balkenelementen stangenartige Riegelmechanismen angeordnet sind, mit denen die Kopfstücke an den Schienen zur Verstellung des Trennelementes in Längsrichtung der Balkenelemente verstellbar und verriegelbar sind. Die stangenartigen Riegelmechanismen übertragen die Verriegelungsbewegung der Kopfstücke entlang der Balkenelemente von einem griffgünstig z.B. mittig angeordneten Handgriff an die beiden Ende des Balkenelementes, so dass dem Bediener des Trennelementes eine bequeme Handhabung des Trennelementes ermöglicht wird. Derartige Riegelmechanismen können etwa Stangen riegel oder dgl. aufweisen, wie sie beispielsweise aus dem Bereich der Fensterbeschläge bekannt sind und bei denen ein relativ geringes Gewicht mit hoher Festigkeit der Riegelmechanismen einhergeht.

Von Vorteil ist es, wenn die stangenartige Riegelmechanismen die oben und unten an den Balkenelementen angeordneten Kopfstücke gegengleich auseinander drücken oder zusammenschieben, wenn die Balkenelemente verriegelt oder entriegelt werden. Hierdurch kann an beiden Ende des Balkenelementes gleichzeitig und mit einer einzigen Betätigung die Verriegelung und Entriegelung bewirkt werden.

Im Hinblick auf die Positionierung in der Trennelemente schräg zu den Schienen ist es von Vorteil, wenn die Plattenelemente derart verschiebbar an den Balkenelementen gehaltert sind, dass bei Schrägstellung der Plattenelemente relativ den Wandungen der Ladezone ein Anpassung des Abstandes der Balkenelemente relativ zu den Trennelementen erfolgen kann. Bei den Schrägstellung verändert sich der Abstand zwischen den Balkenelementen und wird größer als bei der senkrechten Anordnung der Balkenelemente relativ zu den Schienen, so dass die Balkenelemente um eine entsprechende Ausgleichbewegung relativ zu den Trennelementen verschiebbar sein müssen, um die Festlegung in den Schienen der Ladezone weiterhin gewährleisten zu können.

Eine besonders bevorzugte Ausführungsform der Trennelemente erfindungsgemäßen zeigt die Zeichnung.

Es zeigen:
- Figur 1: - eine erste schematisch dargestellte Ausgestaltung der erfindungsgemäßen Einrichtung mit im Boden und Dachbereich angeordneten Schienen zur Verstellung von Trennelementen in der Ladezone eines schematisch angedeuteten Fahrzeuges,
- Figur 2: - Einrichtung gemäß Figur 1 mit einem gerade und einem schräg angeordneten Trennelement,
- Figur 3: - Einrichtung gemäß Figur 1 in der Draufsicht mit angedeuteten zu transportierenden Gegenständen,
- Figur 4: - Einrichtung gemäß Figur 1 mit einem gerade und einem nach oben geklappten Trennelement,
- Figur 5: - eine Konfiguration der erfindungsgemäßen Einrichtung gemäß Figur 1 mit einem als Laderampe angeordneten Trennelement,
- Figur 6: - eine andere Ausgestaltung der erfindungsgemäßen Einrichtung mit im seitlichen Wandungsbereich angeordneten Schienen zur Verstellung der Trennelemente,
- Figur 7: - Einrichtung gemäß Figur 6 mit einem gerade und einem schräg weggeklappten Trennelement,
- Figur 8a-8c -: Verstellmöglichkeiten eines aus Balkenelementen und Einzelelementen gebildeten Trennelementes zur seitlichen und oberen Vergrößerung des Trennelementes,
- Figur 9: - Balkenelement mit oberseitig und unterseitig dargestellten Schienen und Schiebern und Formelementen zum Festsetzen in den Schienen im entriegelten Zustand,
- Figur 10: - Balkenelement gemäß Figur 9 im verriegelten Zustand,
- Figur 11: - oberes Ende des Balkenelementes gemäß Figur 10,
- Figur 12: - oberes Ende des Balkenelementes gemäß Figur 9,
- Figur 13: - ein unterer Endbereich des Balkenelementes gemäß Figur 9 mit daran angeordnetem Führungselement.

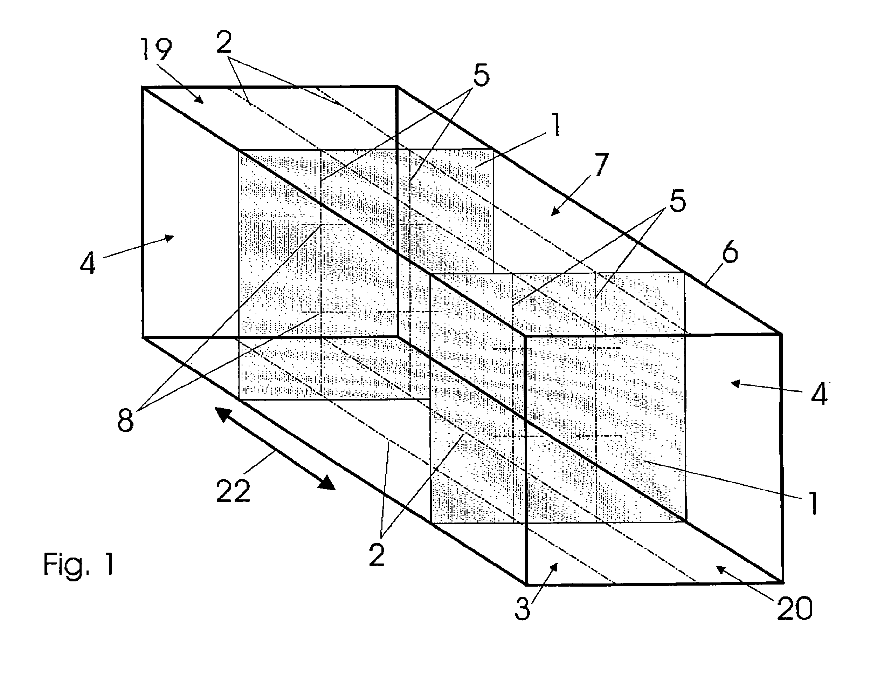

In den Figuren 1 bis 5 ist eine erste Ausgestaltung der erfindungsgemäßen Einrichtung dargestellt, bei der ein nur schematisch angedeutetes Fahrzeug mit einer Umgrenzung 6 der Ladezone 3 mit erfindungsgemäßen ausgestalteten Trennelementen 1 ausgestattet ist. Hierbei stellt die Umgrenzung 6 der Ladezone 3 beispielsweise den Laderaum eines Kleintransporters oder dergleichen dar, mit dem Güter in Form von Gegenständen 9, 10 transportiert werden. Es kann sich selbstverständlich auch um jede andere Art von Fahrzeug wie Pkws, Lastkraftwagen oder auch Schiffe oder Flugzeuge handeln, die einen entsprechenden Laderaum aufweisen. Die Ladezone 3 wird hierbei durch einen Boden, zwei Seitenwandungen 4, eine vordere Wandung 19 beispielsweise in Richtung einer nicht dargestellten Fahrerkabine und eine hintere Wandung 20, die gleichzeitig in Form einer Ladeöffnung gestaltet sein kann, aufweisen.

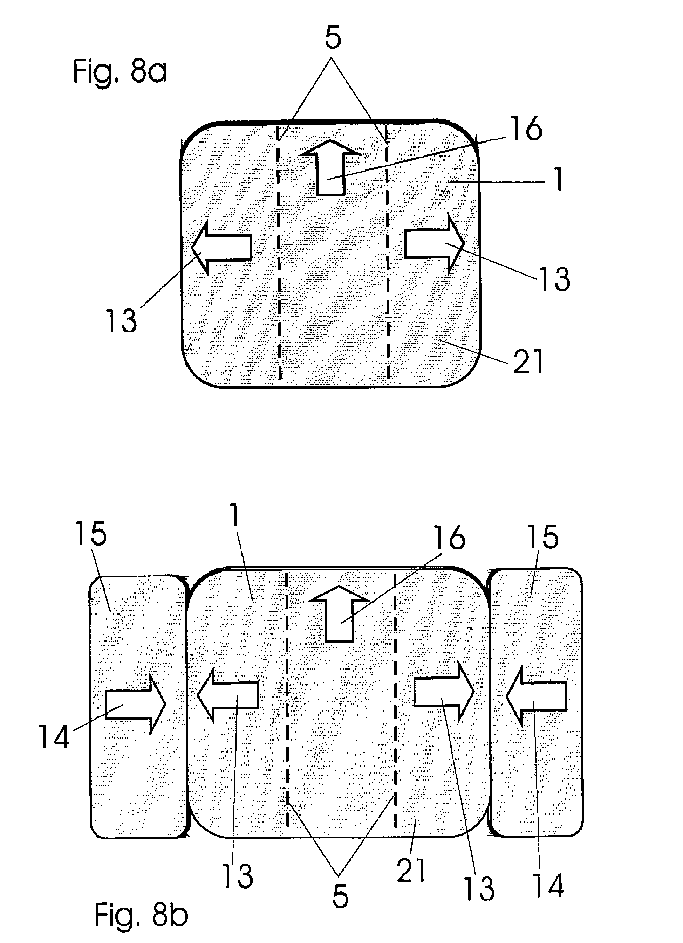

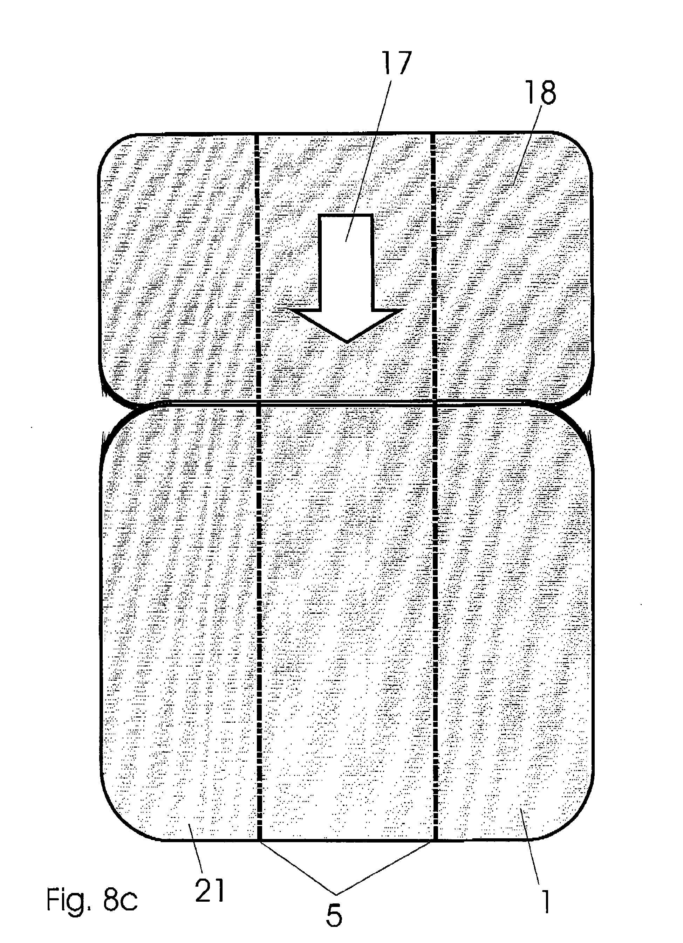

Innerhalb der Umgrenzung 6 der Ladezone 3 werden die Gegenstände 9, 10 üblicherweise auf eine Ladefläche abgestellt und mithilfe der erfindungsgemäß gestaltenden Trennelemente 1 gegen Verrutschen gesichert. Die Trennelemente 1 sind im wesentlichen plattenförmig ausgebildete Bauteile, in deren Mittenbereich zwei Balkenelemente 5 zwischen oberseitig und unterseitig angeordneten Schienen 2 eingespannt und gehalten sind. Die Schienen 2 sind beispielsweise bündig in die Ladefläche und in den Dachraum der Umgrenzung 6 der Ladezone 3 eingelassen und bieten eine Haltemöglichkeit für an den Balkenelementen 5 angeordnete, nicht weiter dargestellte Adapterelemente. Diese Adapterelemente verankern sich damit in den Schienen 2 und verspannen die Balkenelemente 5 zwischen den hier oberseitig und unterseitig angeordneten Schienen 2. An den Balkenelementen 5 angeordnete Einzelelemente in Form von einem Mittelteil 21, Seitenteilen 15 und einem Kopfteil 18 können relativ zu den Balkenelementen 5 wie in der Figur 8 dargestellt verstellt werden und bieten damit eine Anpassungsmöglichkeit der Größe des Trennelementes 1 bezogen auf die jeweils zu sichernden Gegenstände 9, 10 beziehungsweise die Abmessungen der Umgrenzung 6 der Ladezone 3.

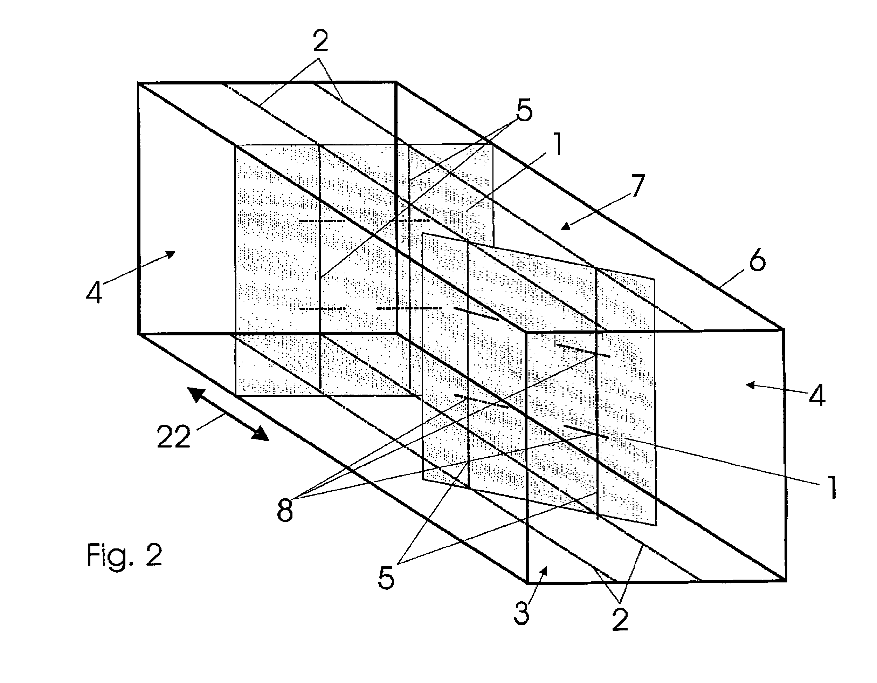

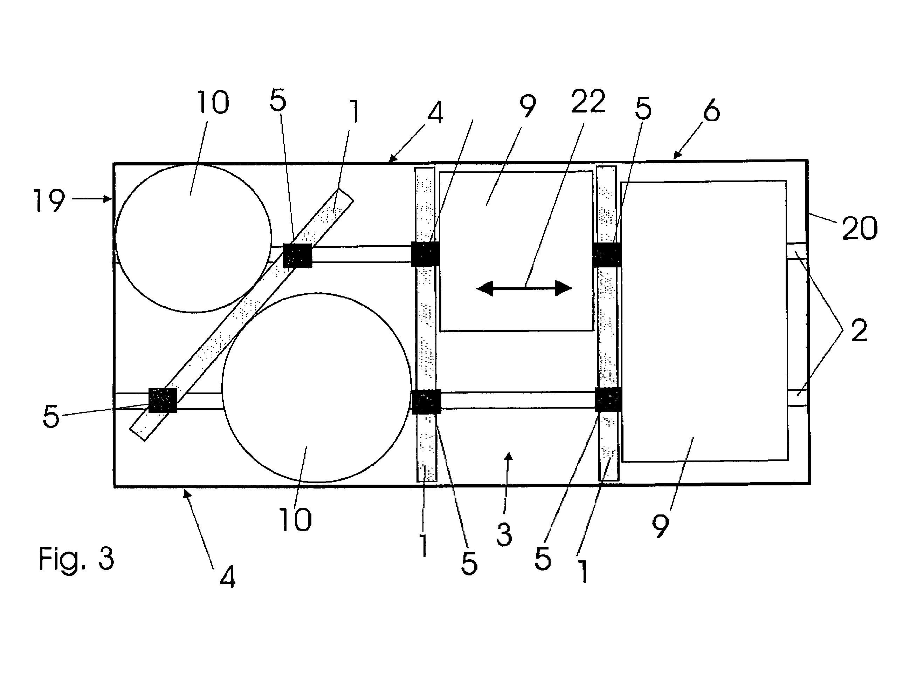

In der Figur 1 ist dargestellt, dass zwei einzelne Trennelemente 1 in der Ladezone 3 im Verstellrichtung 22 der Schienen 2 hintereinander angeordnet sind und im wesentlichen senkrecht zu der Verstellrichtung 22 innerhalb der Ladezone 3 stehen. Hierdurch wird beispielsweise beim Bremsen des Fahrzeuges verhindert, dass die in der Figur 1 nicht weiter dargestellten Gegenstände 9, 10 in der Ladezone 3 unkontrolliert verrutschen und das Fahrzeug und den Fahrer beziehungsweise auch den restlichen Verkehr gefährden. Hierzu werden die Trennelemente 1 wie in der Figur 3 dargestellt so innerhalb der Ladezone 3 angeordnet, dass die Gegenstände 9, 10 sich jeweils an den Trennelementen 1 beziehungsweise den Wandungen 4, 19, 20 abstützen können und daher eine Bewegungsmöglichkeit für die Gegenstände 9, 10 im wesentlichen nicht mehr besteht. Hierbei ist es, wie in der Figur 2 und der Figur 3 näher dargestellt, für runde Gegenstände 10 von Bedeutung, dass das Trennelement 1 auch schräg innerhalb der Ladezone 3 angeordnet werden kann, um eine sichere Klemmung des runden Gegenstandes 10 beispielsweise in einer Ecke der Umgrenzung 6 der Ladezone 3 oder zwischen benachbarten Trennelementen 1 zu bewirken, ohne dass der runde Gegenstand 10 seitlich verrutschen kann. Bei rechteckigen Gegenständen 9 reicht in der Regel die senkrecht zur Verstellrichtung 22 ausgerichtete Festsetzung der Trennelemente 1.

Zur Festsetzung der Trennelemente 1 in den Schienen 2 dienen nicht weiter dargestellte Adapterelemente, mit denen die Trennelemente 1 an den jeweiligen Endbereichen von Balkenelementen 5 in den Schienen 2 beispielsweise kraftschlüssig oder auch formschlüssig festgelegt werden können. Hierzu ist eine Vielzahl von technischen Lösungen denkbar, beispielsweise kann in einer C-förmig ausgebildeten Schiene 2 ein entsprechender Klemmkörper eingesetzt sein, in den mittels eines Gewindes ein Klemmelement eingeschraubt wird und damit den Klemmkörper an der Schiene 2 festsetzt.

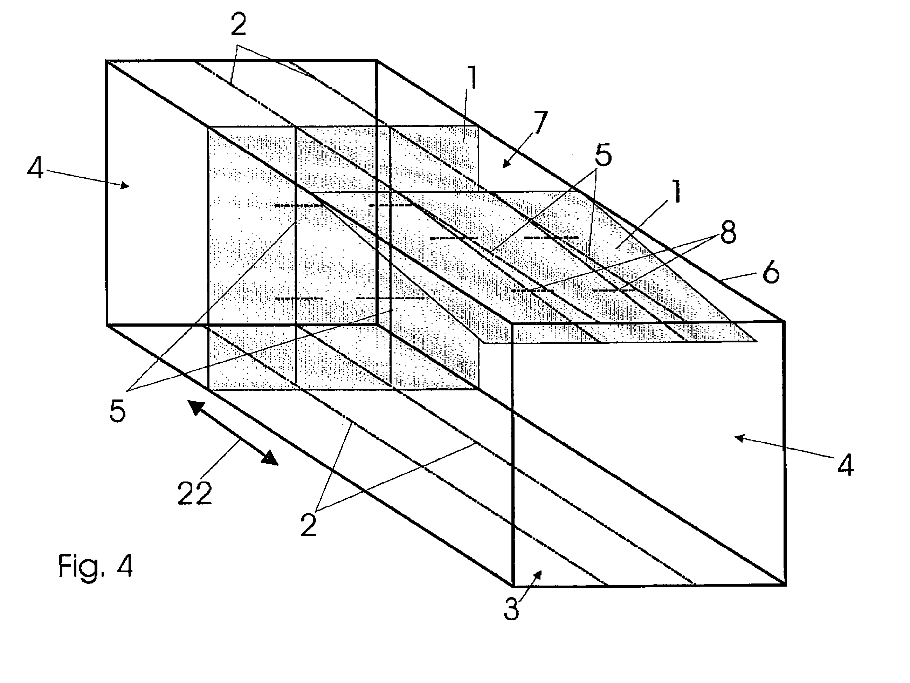

Wie in der Figur 4 näher zu erkennen ist, können die Trennelemente 1 auch einseitig aus den Schienen 2 gelöst werden und dann beispielsweise nach oben weggeklappt und damit die Ladezone 3 freigebend gehaltert werden. Hierzu sind beispielsweise an den Adapterelementen entsprechenden Scharniere oder dergleichen vorgesehen, mit denen das über die Adapterelemente in einem Paar der Schienen 2 verbleibende Trennelement 1 zum Beispiel hängend befestigt wird und durch Herumklappen und Sichern des Trennelementes 1 die Ladezone 3 zum Beladen vollständig freigibt.

Wie insbesondere aus der Figur 2 hervorgeht, ist bei einer Schrägstellung der Trennelemente 1 die Notwendigkeit gegeben, die Balkenelemente 5 in einem sich vergrößernden Abstand bezogen auf das Mittelteil 21 abhängig von dem Schrägungswinkel anzuordnen. Hierzu sind nicht weiter konstruktiv beschriebene Verstelleinrichtungen 8 an den Trennelementen 1 angeordnet, die eine Verstellung der Balkenelemente 5 derart ermöglichen, dass die Enden der Balkenelemente 5 in den Schienen 2 weiterhin auch in der schrägen Anordnung gehaltert werden können.

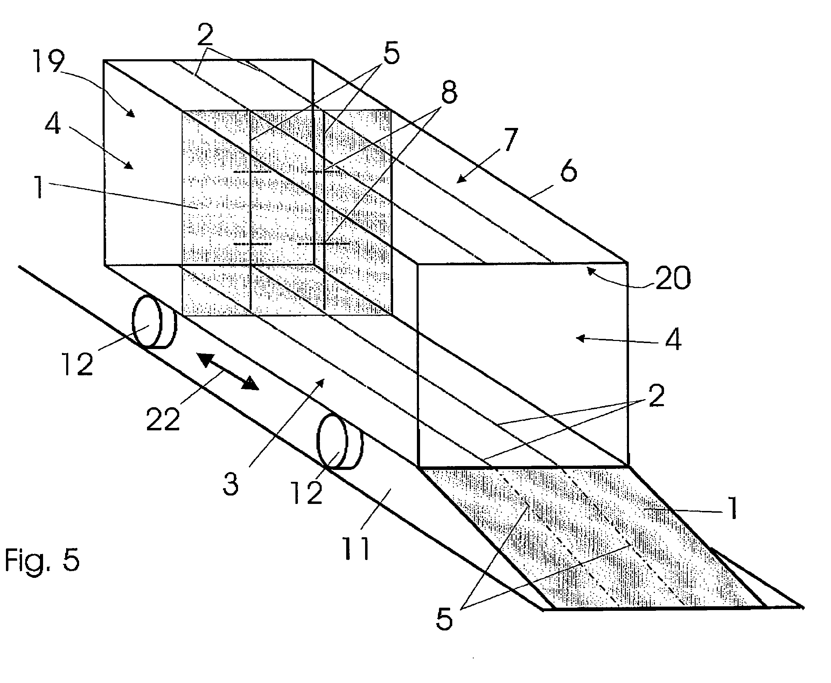

In der Figur 5 ist eine Anwendung eines erfindungsgemäßen gestalteten Trennelementes 1 derart angedeutet, dass das Trennelement 1 in Form einer Laderampe im Bereich der hinteren Ladeöffnung 20 verwendet werden kann. Ein beispielsweise als Kleintransporter ausgebildetes Fahrzeug mit der erfindungsgemäßen Einrichtung ist üblicherweise so ausgestaltet, dass der Boden der Ladezone 3 durch die Räder 12 in einem entsprechenden Abstand von einem Untergrund 11 angeordnet ist und auf der Ladefläche angeordnete Gegenstände 9, 10 daher beim Entladen und beim Beladen diese Höhendifferenz überwinden müssen. Hierzu kann ein erfindungsgemäß gestaltetes Trennelement 1 derart in den Schienen 2 im Bereich der Ladeöffnung 20 angeordnet werden, dass es den hinteren Bereich der Ladezone 3 und den Untergrund 1 in Form einer Laderampe verbindet. Hierzu werden nur die Adapterelemente des Trennelementes 1 einseitig in den unteren Schienen 2 belassen und das Trennelement 1 nach außen aus dem Fahrzeug geklappt und mit seinem anderen Ende auf dem Untergrund 11 abgestellt. Damit kann die Beladung und Entladung gerade auch von Fahrzeugen, die keine serienmäßige Laderampe oder Hubbühne haben, wesentlich vereinfacht werden. Anschließend kann das Trennelement 1 wieder normal eingeklagt und zur Sicherung der eingeladenen Gegenstände 9, 10 benutzt werden.

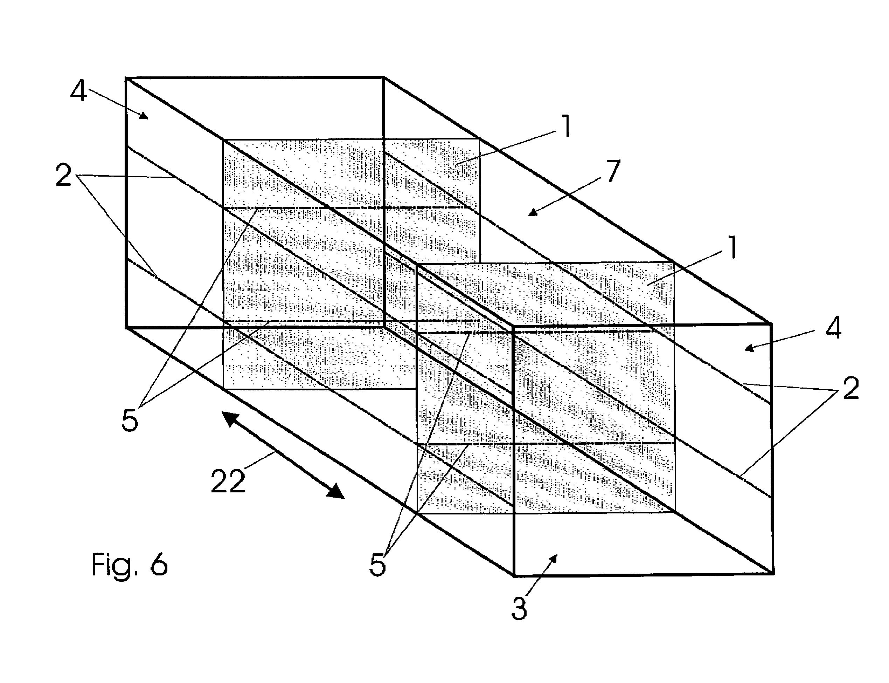

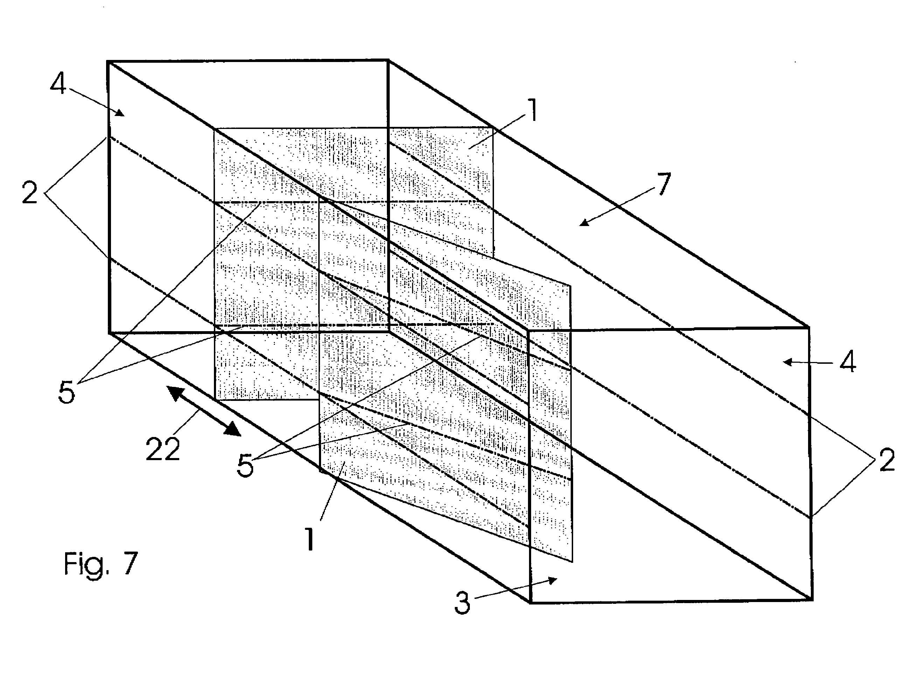

In den Figuren 6 und 7 ist eine andere Ausgestaltung der erfindungsgemäßen Einrichtung dargestellt, bei der die Schienen 2 nicht im Bodenbereich und im Deckenbereich der Umgrenzung 6 der Ladezone 3 angeordnet sind, sondern in den seitlichen Wandungen 4. Eine derartige Anordnung der Schienen 2, die ansonsten im wesentlichen gleichwertig zu der schon beschriebenen Anordnung der Schienen 2 im Bodenbereich und im Dachbereich des Fahrzeuges ist, macht unter Umständen je nach den Platzverhältnissen innerhalb der Ladezone 3 des Fahrzeuges Sinn. Auch hierbei kann, wie in der Figur 7 zu erkennen, das Trennelement 1 entsprechend aus der Ladezone 3 an die Seitenwand 4 weggeklappt werden.

In der Figur 8 sind die Möglichkeiten dargestellt, wie das Trennelement 1 aus einem Balkenelement 5 und Einzelelementen in Form von Seitenteilen 15, einem Kopfteil 18 und einem Mittelteil 21 verstellbar gebildet werden kann. Die Balkenelemente 5 nehmen hierbei hauptsächlich die Lasten beispielsweise aufgrund von Bremsungen auf, die die Gegenstände 9, 10 auf die Trennelemente 1 ausüben können- Zur Anpassung des Trennelementes 1 an die Abmessungen der Gegenstände 9, 10 sowie die Abmessungen der Umgrenzung 6 der Ladezone 3 können zwei Seitenteile 15 durch eine seitliche Ausstellbewegung 13 ausgestellt beziehungsweise durch eine seitliche Einschubbewegung 14 wieder eingefahren werden. Ebenfalls ist es möglich, das Trennelement 1 durch eine vertikale Einschubbewegung 17 nach obenhin zu verlängern oder wieder zu verkleinern. Damit kann das Trennelement 1 insgesamt wesentlich leichtgewichtiger ausgebildet werden, als dies bei einer einteiligen Gestaltung der Fall sein könnte. Selbstverständlich es ist auch denkbar, die Seitenteile 15 und das Kopfteil 18 auszuklappen und in der ausgeklappten Stellung zu fixieren.

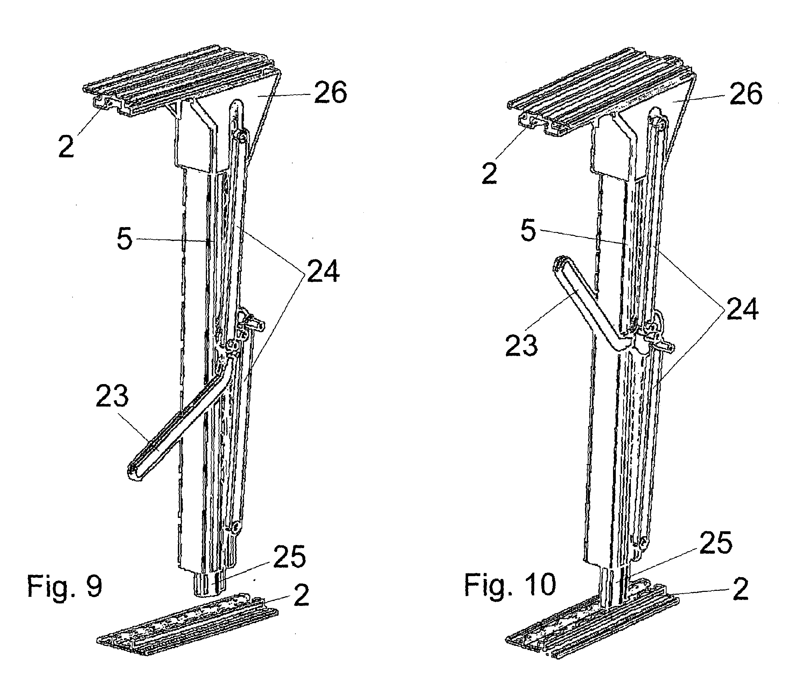

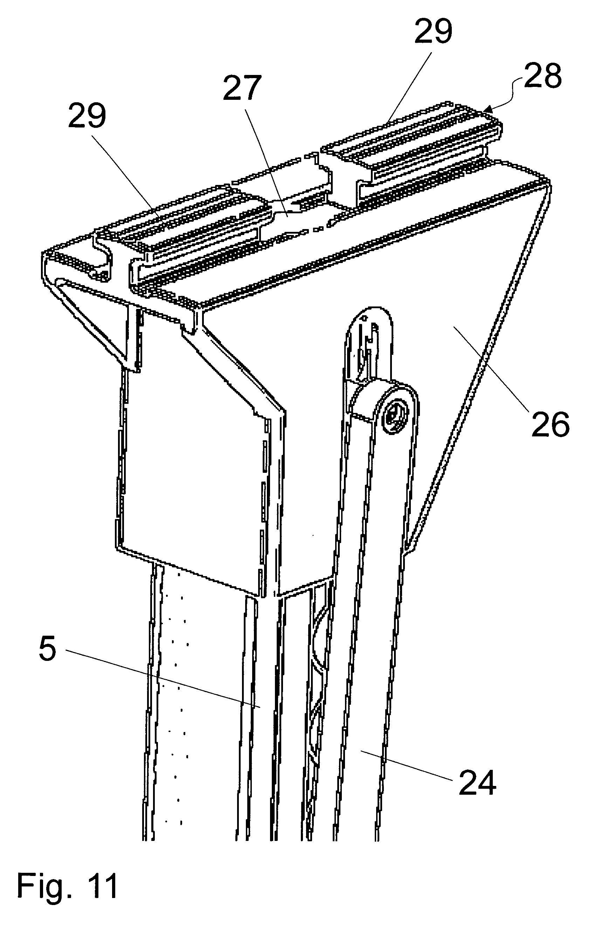

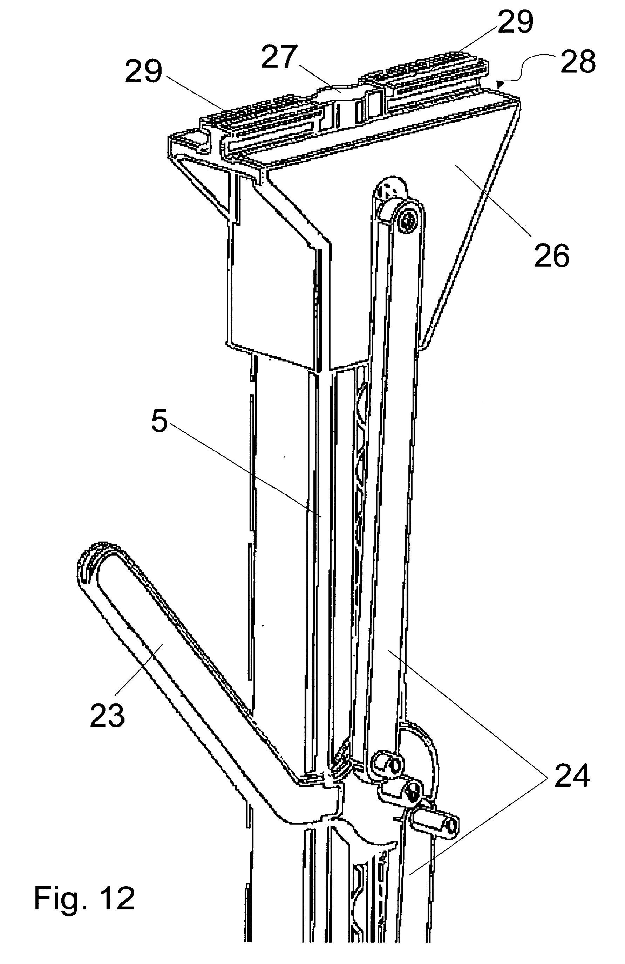

In den Figuren 9 bis 12 ist in einer beispielhaften Ausgestaltung ein Balkenelement 5 dargestellt, bei dem die oberseitig und unterseitig dargestellten Schienen 2 mittels Schiebern 25, 27 in den Schienen festgesetzt werden können. Hierzu ist im Inneren des etwa aus einem Profil gebildeten Balkenelementes ein Stangenantrieb aus den Stangen 24 für die Schieber 25, 27 vorgesehen, der mittels eines Hebels 23 dafür sorgt, dass die Schieber 25, 27 beim Verriegeln in Längsrichtung des Balkenelementes 5 nach außen ausgefahren und beim Entriegeln in Längsrichtung des Balkenelementes 5 eingefahren werden Die Schieber 25, 27 greifen hierbei in die entsprechend gegengleich geformten Ausnehmungen der Schienen 2 ein und verhindern eine Längsbewegung des Balkenelementes 5 und damit des Trennelementes 1. Quer zur Längsrichtung der Schienen 2 wird das Balkenelement 5 durch T-Stückartige Formelemente gesichert, die entsprechend der beispielsweise im Querschnitt ebenfalls T-Stückartig geformten Schienen 2 ausgebildet und verschieblich in den Schienen aufnehmbar sind. Diese im Kopfbereich 26 des Balkenelementes 5 angeordneten, insgesamt mit der Sachnummer 28 bezeichneten Formelemente 29 und Schieber 25, 27 ermöglichen damit eine durch den etwa mittig angeordneten Hebel 23 griffgünstige Betätigung des Balkenelementes 5 und damit des Trennelementes 1. Gleichzeitig kann das Balkenelement 5 im entriegelten Zustand durch die Führung der Formelemente 29 in der oberen Schiene 2 hängend im gesamten Laderaum einfach und ohne große Gewichtsbelastung verschoben werden, wodurch sich die Anpassung der Trennelemente an die jeweilige Ladesituation weiter vereinfacht.

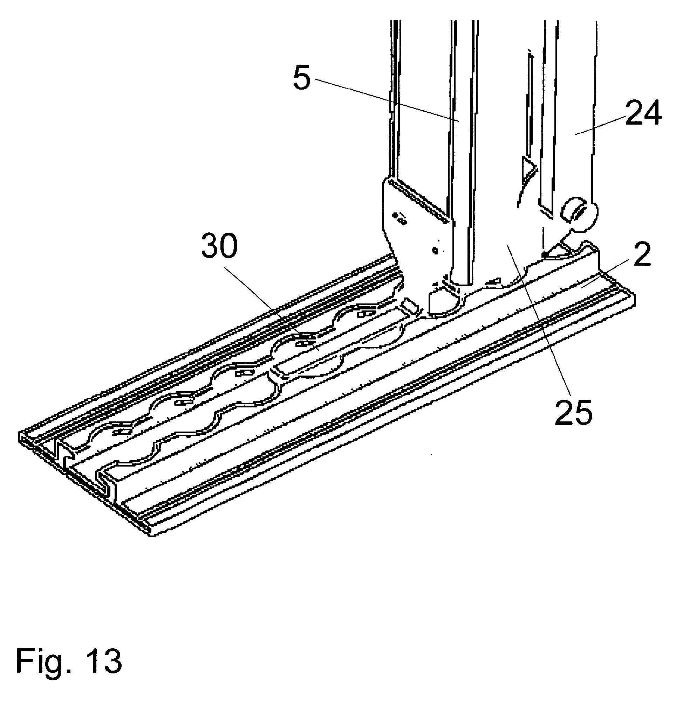

In Figur 13 ist ein unterer Endbereich des Balkenelementes 5 gemäß Figur 9 mit daran angeordnetem Führungselement 30 dargestellt, wobei das Führungselement 30 zur Führung des Balkenelementes 5 in der Schiene 2 dient. Beim Verschieben des Balkenelementes 5 in der Schiene 2, etwa zum Einstellen einer neuen Lage des Trennelementes 1 kann es sonst passieren, dass das untere Ende des Balkenelementes 5 nur ungenau in der Schiene 2 positioniert wird und daher da Einrasten in der Schiene 2 erschwert wird. Durch Vorsehen eines Führungselementes 30, das möglichst spielfrei aber gut verschiebbar in der Schiene 2 geführt wird, verbessert sich die Bedienung des Balkenelementes 5 deutlich. Das Führungselement 30 kann beispielsweise wie in der Figur 13 angegeben als separates, winkelartiges Teil ausgebildet sein, dessen einer Schenkel an dem Balkenelement 5 festgelegt ist und dessen anderer Schenkel in die Schiene 2 hinein ragt. Es ist aber auch denkbar, dass das Führungselement 30 einstückig aus dem Balkenelement 5 oder auch aus dem Schieber 23, 25 geformt wird.

### Sachnummernliste

- 1: - Trennelement
- 2: - Schienen
- 3: - Boden Ladezone
- 4: - Seitenwand Ladezone
- 5: - Balkenelement
- 6: - Umgrenzung Ladezone
- 7: - Decke Ladezone
- 8: - Verstelleinrichtung
- 9: - eckiges Transportgut
- 10: - rundes Transportgut
- 11: - Untergrund
- 12: - Räder
- 13: - seitliche Ausstellbewegung
- 14: - seitliche Einschubbewegung
- 15: - Seitenteile
- 16: - vertikale Ausstellbewegung
- 17: - vertikale Einschubbewegung
- 18: - Kopfteil
- 19: - vordere Wandung
- 20: - hintere Wandung/Ladeöffnung
- 21: - Mittelteil
- 22: - Verstellrichtung
- 23: - Hebel
- 24: - Stangen
- 25: - Schieber
- 26: - Kopfstück
- 27: - Schieber
- 28: - Einhängung
- 29: - Formelemente
- 30: - Führungselemente

## Patentansprüche

1. Einrichtung zur Ladungssicherung für Fahrzeuge mit einer Ladefläche, aufweisend ein Trennelement (1) zwischen einem beim Transport von Gegenständen (9, 10) belegten Bereich und einem beim Transport von Gegenständen (9, 10) unbelegten Bereich einer Ladezone (3) des Fahrzeuges,
**dadurch gekennzeichnet dass**
das mindestens eine Trennelement (1) eine plattenförmige Grundform aufweist und auf einem im Bereich der Ladezone (3) angeordneten Schienensystem (5) verstellbar die Ladezone (3) derart unterteilt, dass in der Ladezone (3) angeordnete Gegenstände (9, 10) zwischen den Wandungen (4, 19, 20) der Ladezone (3) und dem Trennelement (1) oder zwischen benachbarten Trennelementen (1) gehaltert verrutschungssicher aufgenommen sind.

2. Einrichtung zur Ladungssicherung gemäß Anspruch 1, **dadurch gekennzeichnet, dass** das Trennelement (1) aus mehreren plattenartigen Einzelelementen (21, 15, 18) besteht, die verschiebbar oder klappbar aneinander festgelegt sind und mit denen die Größe des Trennelementes (1) den Abmessungen der Ladezone (3) und der zu transportierenden Gegenstände (9, 10) anpassbar sind.

3. Einrichtung zur Ladungssicherung gemäß Anspruch 2, **dadurch gekennzeichnet, dass** die mehreren plattenartigen Einzelelemente (21, 15, 18) teleskopartig zueinander verschiebbar sind.

4. Einrichtung zur Ladungssicherung gemäß einem der vorstehenden Ansprüche, **dadurch gekennzeichnet, dass** mehrere Trennelemente (1) im Bereich der Ladezone (3) in Verstellrichtung der (22) Schienen (2) hintereinander angeordnet sind.

5. Einrichtung zur Ladungssicherung gemäß einem der vorstehenden Ansprüche, **dadurch gekennzeichnet, dass** die Schienen (2) zur Verstellung des Trennelementes (1) an den oberen und unteren Wandungen (3, 7) des Transportfahrzeuges im Bereich der Ladezone (3) angeordnet sind.

6. Einrichtung zur Ladungssicherung gemäß einem der Ansprüche 1 bis 4, **dadurch gekennzeichnet, dass** die Schienen (2) zur Verstellung des Trennelementes (1) an den seitlichen Wandungen (4) des Fahrzeuges im Bereich der Ladezone (3) angeordnet sind.

7. Einrichtung zur Ladungssicherung gemäß einem der vorstehenden Ansprüche, **dadurch gekennzeichnet, dass** die Schienen (2) zur Verstellung des Trennelementes (1) ein Paar parallel zueinander angeordnete, zueinander beabstandete Einzelschienen aufweist.

8. Einrichtung zur Ladungssicherung gemäß einem der vorstehenden Ansprüche, **dadurch gekennzeichnet, dass** die Schienen (2) zur Verstellung des Trennelementes (1) in den Boden (3) oder die Wandungen (4) des Fahrzeuges bündig eingelassen sind.

9. Einrichtung zur Ladungssicherung gemäß einem der vorstehenden Ansprüche, **dadurch gekennzeichnet, dass** die Schienen (2) zur Verstellung des Trennelementes (1) im wesentlichen über die ganze Länge der Ladezone (3) verlaufen.

10. Einrichtung zur Ladungssicherung gemäß einem der vorstehenden Ansprüche, **dadurch gekennzeichnet, dass** die Schienen (2) zur Verstellung des Trennelementes (1) im wesentlichen einen C-förmigen, zur Ladezone (3) hin offenen Querschnitt aufweisen.

11. Einrichtung zur Ladungssicherung gemäß einem der vorstehenden Ansprüche, **dadurch gekennzeichnet, dass** die Schienen (2) zur Verstellung des Trennelementes (1) Vorsprünge oder Hinterschnitte aufweisen, an denen Adapterelemente des Trennelementes (1) festsetzbar sind.

12. Einrichtung zur Ladungssicherung gemäß einem der vorstehenden Ansprüche, **dadurch gekennzeichnet, dass** das Trennelement (1) im bestimmungsgemäßen Benutzungszustand beidseitig in den Schienen (2) zur Verstellung des Trennelementes (1) gelagert ist.

13. Einrichtung zur Ladungssicherung gemäß einem der vorstehenden Ansprüche, **dadurch gekennzeichnet, dass** das Trennelement (1) derart in den Schienen (2) zur Verstellung des Trennelementes (1) gelagert und verstellbar ist, dass das Trennelement (1) parallel zu den Schienen (2) innerhalb der Ladezone (3) verschoben werden kann.

14. Einrichtung zur Ladungssicherung gemäß einem der Ansprüche 1 bis 13, **dadurch gekennzeichnet, dass** das Trennelement (1) derart in den Schienen (2) zur Verstellung des Trennelementes (1) gelagert und verstellbar ist, dass das Trennelement (1) auch schräg innerhalb der Ladezone (3) angeordnet werden kann.

15. Einrichtung zur Ladungssicherung gemäß einem der vorstehenden Ansprüche, **dadurch gekennzeichnet, dass** das Trennelement (1) derart in den Schienen (2) zur Verstellung des Trennelementes (1) gehalten ist, dass das Trennelement (1) in seiner jeweiligen bestimmungsgemäßen Position festgesetzt werden kann.

16. Einrichtung zur Ladungssicherung gemäß einem der vorstehenden Ansprüche, **dadurch gekennzeichnet, dass** im Bereich einer Ladeöffnung (20) des Fahrzeuges ein Trennelement (1) in eine Position wie eine Laderampe bringbar ist, mit der ein Einladen von Gegenständen (9, 10) in die Ladezone (3) vereinfacht wird.

17. Einrichtung zur Ladungssicherung gemäß einem der vorstehenden Ansprüche, **dadurch gekennzeichnet, dass** das Trennelement (1) eine Anzahl von Balkenelementen (5), vorzugsweise zwei Balkenelemente (5) aufweist, an denen plattenförmige Einzelelemente (21, 15, 18) angeordnet sind.

18. Einrichtung zur Ladungssicherung gemäß Anspruch 17, **dadurch gekennzeichnet, dass** die Balkenelemente (5) beidends Adapterelemente aufweisen, an denen die Balkenelemente (5) in den Schienen (2) zur Verstellung des Trennelementes (1) gehalten und verstellbar sind.

19. Einrichtung zur Ladungssicherung gemäß Anspruch 18, **dadurch gekennzeichnet, dass** das Trennelement (1) mit den Adapterelementen einseitig von den Schienen (2) zur Verstellung des Trennelementes (1) lösbar ist, so dass das Trennelement (1) um die in den anderen Schienen (2) verbleibenden Adapterelemente herum klappbar ist.

20. Einrichtung zur Ladungssicherung gemäß Anspruch 19, **dadurch gekennzeichnet, dass** das Trennelement (1) nach oben, zur Seite oder nach unten klappbar ist.

21. Einrichtung zur Ladungssicherung gemäß einem der vorstehenden Ansprüche, **dadurch gekennzeichnet, dass** das Trennelement (1) mit den Adapterelementen von den Schienen (2) zur Verstellung des Trennelementes (1) lösbar ist, so dass das Trennelement (1) aus der Ladezone (3) entnehmbar ist.

22. Einrichtung zur Ladungssicherung gemäß einem der vorstehenden Ansprüche, **dadurch gekennzeichnet, dass** die Adapterelemente Gleitstücke aufweisen, die innerhalb der Schienen (2) zur Verstellung des Trennelementes (1) verschiebbar sind.

23. Einrichtung zur Ladungssicherung gemäß Anspruch 22, **dadurch gekennzeichnet dass** das Trennelement (1) mit den Adapterelementen an den oberen Schienen (2) zur Verstellung des Trennelementes (1) im Bereich der Ladefläche hängend bewegbar ist.

24. Einrichtung zur Ladungssicherung gemäß einem der Ansprüche 22 oder 23, **dadurch gekennzeichnet, dass** die Gleitstücke und die balkenelementseitig angeordneten Teile des Adapterelementes voneinander lösbar verbunden sind.

25. Einrichtung zur Ladungssicherung gemäß Anspruch 21, **dadurch gekennzeichnet, dass** die Adapterelemente Kopfstücke aufweisen, die in die Schienen (2) zur Verstellung des Trennelementes (1) einsteckbar und an den Schienen (2) verriegelbar sind.

26. Einrichtung zur Ladungssicherung gemäß einem der vorstehenden Ansprüche, **dadurch gekennzeichnet, dass** die Kopfstücke im Querschnitt passend zu gegengleich geformten Vertiefungen in den Schienen ausgebildet sind und beim Verriegeln quer zur Längserstreckung der Schien en in die Vertiefungen hineinbewegbar und in dieser Stellung verriegelbar sind.

27. Einrichtung zur Ladungssicherung gemäß einem der vorstehenden Ansprüche, **dadurch gekennzeichnet, dass** der Querschnitt der Kopfstücke die Kopfstücke verdrehgesichert in den Vertiefungen festlegt.

28. Einrichtung zur Ladungssicherung gemäß einem der vorstehenden Ansprüche, **dadurch gekennzeichnet dass** an den Balkenelementen stangenartige Riegelmechanismen angeordnet sind, mit denen die Kopfstücke an den Schienen (2) zur Verstellung des Trennelementes (1) in Längsrichtung der Balkenelemente verstellbar und verriegelbar sind.

29. Einrichtung zur Ladungssicherung gemäß Anspruch 28, **dadurch gekennzeichnet, dass** die stangenartige Riegelmechanismen die oben und unten an den Balkenelementen angeordneten Kopfstücke gegengleich auseinander drücken oder zusammenschieben, wenn die Balkenelemente verriegelt oder entriegelt werden.

30. Einrichtung zur Ladungssicherung gemäß einem der vorstehenden Ansprüche, **dadurch gekennzeichnet, dass** die Einzelelemente (21, 15, 18) derart verschiebbar an den Balkenelementen (5) gehaltert sind, dass bei Schrägstellung der Einzelelemente (21, 15, 18) relativ den Wandungen (4) der Ladezone (3) ein Anpassung des Abstandes der Balkenelemente (5) erfolgen kann.

31. Einrichtung zur Ladungssicherung gemäß einem der vorstehenden Ansprüche, **dadurch gekennzeichnet, dass** die Balkenelemente (5) zumindest in einer der Schienen (2) zur Verstellung des Trennelementes (1) geführt verstellbar sind.

32. Einrichtung zur Ladungssicherung gemäß Anspruch 31, **dadurch gekennzeichnet, dass** zumindest einseitig an den Balkenelementen (5) endseitig Führungselemente (30) angeordnet sind, die von den Balkenelementen (5) in Richtung der Längserstreckung der Schienen (2) abstehen und in den Schienen (2), vorzugsweise im wesentlichen spielfrei gleiten.

33. Einrichtung zur Ladungssicherung gemäß Anspruch 32, **dadurch gekennzeichnet, dass** die Führungselemente (30) als separate Anbauteile an den Balkenelementen (5) endseitig festgelegt sind.

34. Einrichtung zur Ladungssicherung gemäß Anspruch 32, **dadurch gekennzeichnet, dass** die Führungselemente (30) einstückig mit den Balkenelementen (5) ausgebildet sind.
